# EUROPEAN PATENT SPECIFICATION

(11) **EP 0 943 169 B1**
(45) Date of publication and mention of the grant of the patent: **31.10.2001**
(21) Application number: 97954052.3
(22) Date of filing: 04.12.1997
(51) Int. Cl.: H02G 11/00, F16L 3/23

(54) **METHOD OF STORING BUNDLED ITEMS**
VERFAHREN ZUM SPEICHERN VON GEBÜNDELTEN GEGENSTÄNDEN
PROCEDE DE STOCKAGE D'ARTICLES RASSEMBLES

(30) Priority: 06.12.1996 US 760461
(43) Date of publication of application: 22.09.1999
(73) Proprietor: Ginocchio, Mark, H., St Petersburg, FL 33701 (US)
(72) Inventor: Ginocchio, Mark, H., St Petersburg, FL 33701 (US)
(74) Representative: Findlay, Alice Rosemary
(86) International application number: PCT/US97/22250
(87) International publication number: WO 98/25329

(56) References cited:
- GB-A- 758 160
- GB-A- 1 224 535
- GB-A- 2 139 016
- GB-A- 2 245 639
- US-A- 3 660 869
- US-A- 4 958 791
- PATENT ABSTRACTS OF JAPAN vol. 095, no. 008, 29 September 1995 & JP 07 122135 A (SUMITOMO WIRING SYST LTD), 12 May 1995, & JP 07 122 135 A (SUMITOMO WIRING SYSTEMS) 12 May 1995 & US 5 677 513 A (SUMITOMO WIRING SYSTEMS) 14 October 1997

## Description

### Background of the Invention

### I. Field of the Invention

The present invention relates to storage of bundled items and, more particularly, to storage of electrical cords or cables.

### II. Description of Prior Art

Storage of electrical cords or cables has presented numerous challenges. Many people tend to leave their cords simply in a pile. Such an approach is both unsightly and can be unsafe. Indeed, without better organization of the cords, storage can become a nightmare. One need only consider the PC laptop user trying to untangle the mess of cables from the briefcase in a busy airport.

Typically, wire-ties, tie wraps, cable ties, or twist-ties may be used to store cords in an effort to reduce such problems. However, such items are very difficult to use and require a great deal of manual dexterity. In particular, closing these ties around the bundled cord is quite challenging because the ends are free to go wherever they are pushed. Some of those items, and particularly twist-ties such as are used to close garbage bags, are unsightly, have only a short useful life, and can present a risk of injury due to the metal wire contained therein. Other cable management devices have been proposed, but they are usually quite bulky and again require a great deal of manipulation. By way of example, some cable management devices are molded into a split ring with the ends normally urged together. The ends may be temporarily held apart by the user while a cable is inserted into the device. Such a device is difficult to load with the bundled wire because the ends are normally urged together into a closed or nearly-closed position.

U.S. Patent No. 3660869 describes an integral onepiece cable tie comprising an elongated flexible strap, one end of which has a securement device including a pawl with teeth which engage with teeth on the other end of the strap.

G.B. Patent No. 1224535 describes a plastic clip comprising a pair of arms hinged together at one end. At the other end, one arm has a stud with locking shoulders on either side and the other arm has lugs which snappingly engage the locking shoulders when the two arms are brought into a confronting relationship. When the two arms are locked together they define at least one aperture shaped to receive an elongated element.

### Summary of the Invention

There is provided of using a device for handling or storing one or more items, the device having a pair of generally rigid jaw members, each having a hinge end and an outer end, with an inner retaining surface, and an outer press surface extending between the ends of the jaw members being connected together at their hinge ends, such that the jaw members (i) have a first self-sustaining open position in which the outer ends are spaced well apart and the inner retaining surfaces are generally not facing one another, (ii) have a second closed position in which the outer ends are engaged and the inner retaining surfaces are in confronting relationship, and (iii) are self-aligned such that the outer ends automatically engage together upon applying pressure on the outer press surfaces, the method comprising placing the jaw members into the first open position, passing the one or more items through a space defined by the jaw members in the open position, and placing the jaw members into a closed position with the one or more items therein by applying pressure on the outer press surfaces of the jaw members until the inner retaining surfaces grasp against the one or more items, characterised in that the jaw members are capable of adopting a plurality of possible second closed positions to provide a range of adjustment, the placing step comprising placing the jaw members into one of the possible second closed positions.

A device for handling or storing one or more items comprising a pair of generally rigid jaw members, each jaw member having a hinge end and an outer end with an inner retaining surface and an outer press surface extending between the ends of the jaw member, the jaw members being connected together at their hinge ends, such that the jaw members (i) have a first, self-sustaining open position in which the outer ends are spaced well apart and the inner retaining surfaces are generally not facing one another, to define an item-receiving space whereby the one or more items may pass into and between the jaw members without requiring external pressure to maintain the jaw members in the open position, (ii) have a second, closed position in which the outer ends are engaged and the inner retaining surfaces (30, 42) are in confronting relationship, and (iii) are self-aligned such that the outer ends automatically engage together upon applying pressure on the outer press surfaces, characterised in that the jaw members are capable of adopting a plurality of possible second closed positions in each of which the outer ends are engaged to provide a range of adjustment and the jaw members are in one of the second closed positions for handling or storing the one or more items.

The present invention provides a method of storing bundled items, such as electrical cords or cables, which overcomes the above-mentioned drawbacks. To this end, and in accordance with the principles of the present invention, bundled items are stored easily and neatly by utilizing a pair of hinged, rigid jaws which have a self-sustaining open position and are detailed description given below, serve to explain the principles of the invention.
Fig. 1 is a perspective, partially cut-away view of a handcuff-like element in the wide open position to receive a bundled electrical cord in accordance with the method of the present invention;
Fig. 2 is a perspective, partially cut-away view of the handcuff-like element of Fig. 1 in the closed position grasping the bundled electrical cord;
Figs. 3A-3D are a perspective views of an elongated electrical cord being bundled for purposes of describing the method of the present invention;
Fig. 4 is a perspective view of an alternative embodiment of a handcuff-like element for use in the method of the present invention;
Fig. 5 is a perspective view of a second alternative embodiment of a self-aligning device for storing bundled items;
Fig. 6 is a perspective view of a third alternative embodiment of a self-aligning device for storing bundled items;
Fig. 7 is a perspective view of a fourth alternative embodiment of a self-aligning device for storing bundled items;
Fig. 8 is a perspective view of a fifth alternative embodiment of a self-aligning device for storing storing bundled items;
Fig. 9 is a perspective view of a sixth alternative embodiment of a self-aligning device for storing bundled items; and
Fig. 10 is a perspective view of the handcuff-like element of Fig. 1 bundled and in use.

### Detailed Description of the Drawings

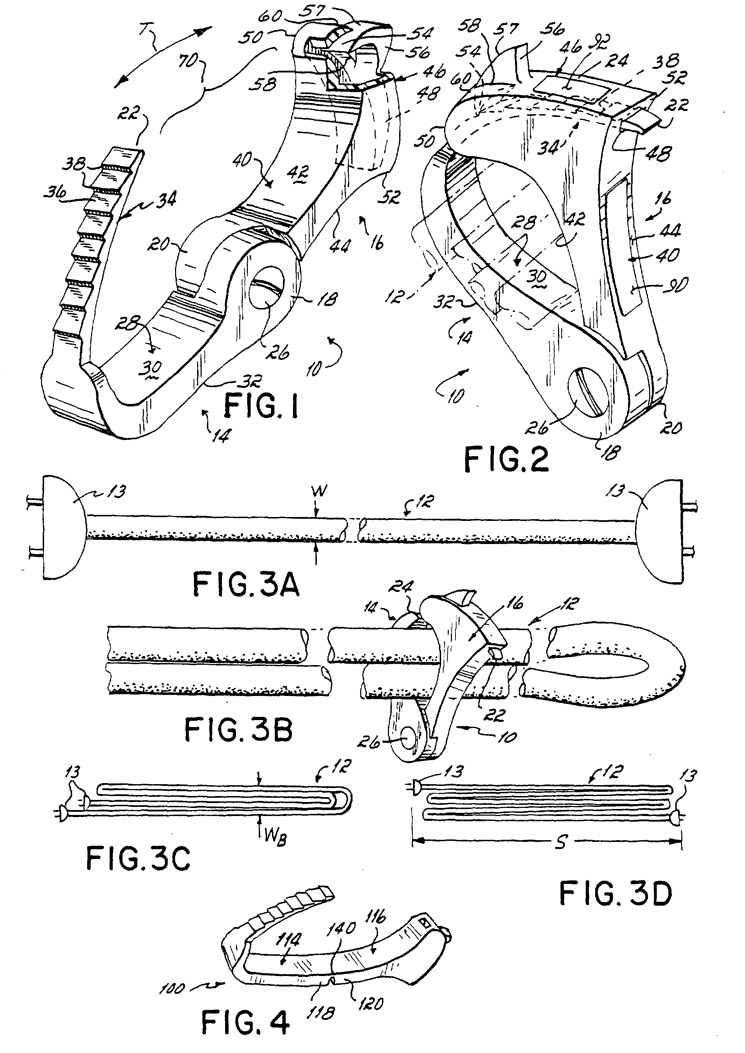

With reference to Figs. 1 and 2, there is shown a handcuff-like element 10 which may be used to store an elongated item such as electrical cord or cable 12 (Fig. 3A) which may have connectors or plug elements 13 at opposite ends thereof, and which has been bundled together (Figs. 3C and 3D). To this end, handcuff-like element 10 includes a pair of generally rigid jaw members 14, 16 each having a proximal hinge end 18, 20, respectively, and a distal, ie outer, attachment end 22, 24, respectively. In the embodiment shown in Figs. 1 and 2, hinge ends 18, 20 are directly connected together by a rivet 26 which functions as an axle to allow the jaw members 14, 16 to pivot relative one another between the wide open position shown in Fig. 1 and the closed position shown in Fig. 2, as will be readily understood.

The proximal aspect 28 of jaw member 14 has an inner retaining surface 30 and an outer press surface 32 extending from hinge end 18 towards attachment end 22. The distal aspect 34 of jaw member 14 extends from proximal aspect 28 at an angle to give jaw member 14 an overall C-shape. The upper surface 36 of distal aspect 34 of jaw member 14 is serrated with teeth as at 38 for purposes to be described hereinafter. The proximal aspect 40 of jaw member 16 has an inner retaining surface 42 and an outer press surface 44 extending from hinge end 20 towards attachment end 24. The distal aspect of jaw member 16 defines a housing 46 with an arced passageway 48 extending between distal tip 50 and back ledge 52. Extending into passageway 48 is a lock member in the form of a tang 54 attached to an actuator button 56 resiliently mounted to housing 46 and extending through an aperture 58 in upper surface 60 of housing 46.

In both jaw members 14 and 16, the inner retaining surfaces 30 and 42 have a gentle arc such that in the wide-open position as shown in Fig. 1, almost the entire extent of the inner surfaces are not facing one another, except perhaps adjacent the distal aspects of the respective jaw members.

The generally rigid nature of the jaw members 14, 16, and the function of axle 26 allow the jaw members to operate in certain ways that are advantageous for storing bundled items. To this end, the wide open position shown in Fig. 1 is self-sustaining in that handcuff-like element 10 will retain that wide-open position with the attachment ends spaced well apart to define a bundle-receiving space 70 therebetween, and with the inner retaining surfaces 30 and 42 generally not facing each other as above-described. Rivet 26 pushes confronting surfaces of the hinge ends 18 and 20 together so as to maintain a frictional engagement therebetween thus holding element 10 in the open position. Similarly, the jaw members 14, 16 are self-aligned in that application of pressure to the press surfaces 32 and 44 will cause the jaw members to move together along a generally fixed path or trajectory (as indicated by double-headed arrow T) that effectively insures that attachment end 22 of jaw member 14 will be received into attachment end 24 of jaw member 16 as the jaw members 14,16 are urged together without need for extra manipulation. As jaw members 14,16 continue to be pushed together, attachment 22 engages with attachment end 24 in the closed position shown in Fig. 2 with the inner retaining surfaces 30 and 42 confronting one another.

To facilitate maintaining handcuff-like element 10 in the closed position as shown in Fig. 2, teeth 38, which may be backwardly directed as shown in Fig. 1, cooperate with tang 54 such that as attachment end 22 of jaw member 14 passes into passageway 48, tang 54 rides over teeth 38 and notches therein to generally prevent jaw member 14 from coming loose from attachment end 24 of jaw member 16. Actuating button 56 by pressing on surface 57 thereof causes tang 54 to momentarily lift upwardly relative passageway 48 and out of engagement with teeth 38 to allow handcuff-like element 10 to be opened.

Handcuff-like element 10 may be made of durable and resilient plastic (such as ABS), metal, or other conventional materials such as wood, or a combination of two or more conventional materials, using conventional manufacturing techniques. Where both metal and plastic are used, the axle (e.g., rivet 26) and tang 54, for example, would be metal with the rest made of plastic.

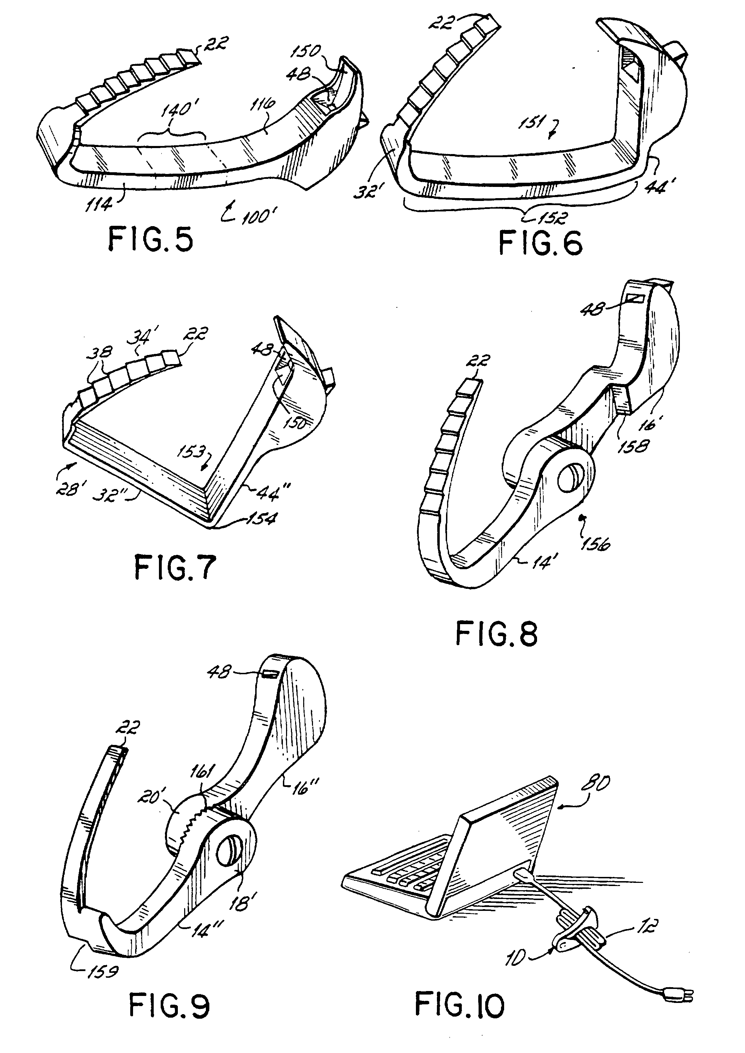

In use, an elongated item such as an electrical cord 12 is to be stored as a bundle (i.e., with several elongated segments S in overlapped condition) with handcuff-like element 10. To this end, the thickness or width W of item 12 is to be increased many-fold (while the length thereof is greatly decreased) by bundling the item 12 in known fashion. For example, cord 12 may be folded back and forth along itself as indicated in Figs. 3A - 3D, such as by folding the cord in half (Fig. 3B) and then in half again (Fig. 3C). The folding in-half process may be repeated as desired until the cord 12 is a bundle as preferred by the user. Alternatively, short lengths or segments S of cord 12 may be folded over and over into a bundle as exemplified by Fig. 3D, or cord 12 may be coiled around the hand or fingers and then pressed together with the same result. As a consequence, there is formed a bundle having a bundled width W_{B} many times (e.g., at least 2 although advantageously at least 4 to 8 or more) greater than width W. Bundled cord 12 may be attached to a useable device such as a PC 80 as in Fig. 10, either before or after being bundled, and either before or after being clamped as will now be described.

Jaw members 14, 16 are spread apart into the self-sustaining open position shown in Fig. 1 whereat no further pressure is needed by the user on jaw members 14 or 16 to retain the open position. While handcuff-like element 10 is in that self-sustained open position, the bundle (such as bundled cord 12 of Fig. 3C or Fig. 3D) is inserted into handcuff-like element 10 through bundle-receiving space 70, either by pushing the bundle into element 10, or by passing open element 10 over the bundle. Thereafter, pressure is applied against press surfaces 32 and 44 in conventional fashion to cause jaw members 14, 16 to engage at their attachment ends 22, 24, until inner retaining surfaces 30 and 42 have grasped against bundled item 12 as shown in dotted line in Fig. 2. The bundled cord 12 is thus held in a small compact bundle, even while in use as in Fig. 5, with easy manipulation of a handcuff-like element and without difficult-to-use and unsightly items as provided in the prior art.

Additionally, surfaces 32, 44, and/or 46 are relatively wide and so may be labeled with indicia (as at 90 or 92). These indicia bearing surfaces may be provided with labels bearing advertisements, directions or indicators of the product being clamped (e.g., Christmas lights, extension cord, PC cable, etc.). The labeling may be permanent or temporary and may be applied by embossing, hot stamping, pad printing, stickers, or hand-written with marker.

With reference to Fig. 4, an alternative embodiment of a handcuff-like element 100 is shown which may be used in the method of the present invention. To this end, jaw members 114, 116 are like jaw members 14, 16 except that hinge ends 118 and 120 are not connected together by an axle, but instead are connected together by a hinge strap 140. Handcuff-like element 100 (including hinge strap 140) may be made of the same plastic as handcuff-like element 10 but with less plastic in the hinge strap 140 due to complementary recesses in the hinge ends 118 and 120 of the jaw members 114, 116, so that hinge strap 140 may bend when jaw members 114 and 116 are pivoted together into the closed position (like that shown in Fig. 2).

Alternatively, as shown in Fig. 5, hinge strap 140 could be made from a different grade or type of plastic. In that instance, a rotational press (not shown) may be used wherein two or more different types or grades of plastic are injected into the same cavity into two or more different areas to make an integral product. In this way, most of handcuff-like element 100' may be made of a less flexible plastic, while hinge strap 140' is made of a more flexible plastic. Alternatively, the same plastic may be cured differently so that most of handcuff-like element 100' is less flexible, while hinge strap 140' is more flexible. In this embodiment, complementary recesses need not be included in the area of hinge strap 140' to reduce the amount of plastic in the hinge strap 140', as a more flexible plastic is used in that area permitting flexible closure of the element 100'.

The resiliency/flexibility of strap 140 tends to force jaw members 114,116 into the open position such that handcuff-like element 100 tends to automatically assume an open position (like Fig. 1) when it is not closed. Operation of handcuff-like elements 100 and 100' is otherwise substantially identical to that of handcuff-like element 10.

Due to the potential for slight misalignment of attachment end 22 and passageway 48 when the element 100' of Fig. 5 is closed, the passageway 48 may incorporate a guide area 150 at its opening where attachment end 22 is received. This guide area provides a large opening for receiving attachment end 22, which has beveled sides for guiding attachment end 22 into passageway 48 when element 100' is closed about a bundle. A similar or alternate guide area may be used in this or the other embodiments of the present invention shown in other Figs.

Referring to Fig. 6, in still another embodiment of the invention, an alternative element 151 includes a region 152 of a sufficiently resilient plastic or other material that the entirety of region 152 will bow into a curved shape when finger pressure is applied to the outer press surfaces 32' and 44' of element 151. Here again, any slight misalignment between attachment end 22 and passageway 48 when element 151 is brought to a closed position, is corrected by guide area 150 which guides attachment end 22 into passageway 48.

Referring to Fig. 7, in a further embodiment, element 153 is formed with a crease 154 in its center section, providing an area of greater flexibility in the molded plastic structure such that when force is applied to outer press surfaces 32" and 44", element 153 bends about crease 154, causing attachment end 22 to self-align and insert into passageway 48. Here again, a guide area 150 is included in passageway 48. It will be noted that a curve, rather than a right angle bend, may be formed at the junction between the distal aspect 34' and proximal aspect 28' of the jaw member shown in Fig. 7. Moreover, teeth 38 may be formed over a longer distance, for example, along the entire length from attachment end 22 throughout press surface 32" to crease 154, permitting a wider range of adjustment when the jaw members are in their closed position. Furthermore, crease 154 may be located at any point between attachment end 22 and passageway 48, so long as end 22 and passageway 48 self-align when end 22 and passageway 48 are pressed together toward each other, potentially further increasing the range of adjustment.

In the embodiments of the invention shown in Figs. 1 and 2, complementary recesses are formed in jaw members 14 and 16. Referring to Figs. 8 and 9, in further embodiments of a handcuff-like element 156 similar to element 10 shown in Figs. 1 and 2, only one such recess 158 need be formed in one of jaw members 14' or 14" and 16' or 16". In Fig. 8, a recess is formed on jaw member 16', of sufficient dimensions to align attachment end 22 with passageway 48. In Fig. 9, a recess 159 is formed on jaw member 14", of sufficient dimensions to align attachment end 22 with passageway 48. Notably, no complementary recesses are formed in jaw member 14' of Fig. 8 or jaw member 16" of Fig. 9, as the dimensions of recesses 158 and 159 are sufficient to align attachment end 22 with passageway 48.

Referring particularly to Fig. 9, it can be seen that the engagement between the jaw members 14" and 16" may be maintained by structure formed at the hinged interface between those members, rather than by structure formed at the outer ends of those members. Specifically, as seen in Fig. 9, jaw members 14" and 16" may include mating knurled teeth 161 at their hinged ends 18" and 20", so that jaw members 14" and 16" frictionally engage with a force sufficient to hold members 14" and 16" engaged together tightly about a bundle. The frictional engagement between members 14" and 16" can be overcome by manual force applied to members 14" and 16", causing knurled teeth 161 to slide past one another and permit the jaws to close or open. It will be appreciated that a similar frictional engagement at the hinged ends 18 and 20 of the handcuff-like element can be used in any of the embodiments and Figs. discussed herein. Furthermore, other frictional engagement structures, such as a mechanical rachet, could also be used at the hinged connection between the jaw members in any of the embodiments and Figs. discussed herein.

It will be appreciated that the structure which retains the jaw members (14, 16) in engagement, may or may not be releaseable. In applications where the disclosed structures will be used relatively permanently (e.g., in electronics manufacturing), a releaseable engagement is not necessary, and thus non-releasable structures may be used, e.g., actuator button 56 for releasing tang 54 in the retaining structure shown in Figs. 1, 2, 4, 5, 6, 7 and 8, may be eliminated, possibly reducing the cost of manufacture. Other nonreleaseable mechanical or frictional engagement structures can also be used.

While the present invention has been illustrated by the description of embodiments of the invention, advantages and modifications will readily appear to those skilled in the art. By way of example, although the bundled item (12) is shown as a single elongated item folded over upon itself, it will be appreciated that a bundle could alternatively refer to a plurality of separate, typically elongated items held together as a bundle. Furthermore, a flat object such as a cloth napkin may be bundled and stored by gathering the flat object together into a bundle and capturing the bundle in the same manner as a bundled electrical cord. Consequently, whether multiple overlying segments of one item define the bundle or multiple items define the bundle, each of which would appear as in Fig. 2, the result is a bundle that has a width or thickness substantially greater than any one item in the bundle. Additionally, various structural changes are possible. For example, serrated teeth and the tang may be replaced with other cooperating latch elements as will be apparent. Similarly, less pronounced, or a different number of teeth may be employed. So, too, rivet 26 may be replaced with a screw or self attaching clip or the like. In the element 100, hinge strap 140 may be formed by ultrasonically welding jaw members 114, 116 together at their hinge ends. Further, handcuff-like element 10 may be provided with a spring loaded hinge and/or locking device (both not shown) to assist in keeping the jaw members 14, 16 in the open position without external pressure as is accomplished with hinge strap 140 of element 100. Also, the handcuff-like element may be manufactured separately from the bundled item with which it is used, or may be attached to the item with which it is to be used, e.g., the handcuff-like element may be permanently attached by a strap or string to an electrical cord for use in bundling the electrical cord, or may be partially or wholly formed as part of the object being bundled, e.g., partially formed in the plug of an electrical cord.

## Claims

1. A method of using a device for handling or storing one or more items (12), the device having a pair of generally rigid jaw members (14, 16, 114, 116, 14', 16', 14", 16") each having a hinge end (18, 20, 118, 120) and an outer end (22, 24), with an inner retaining surface (30, 42), and an outer press surface (32, 44, 32', 44', 32", 44") extending between the ends of the jaw members (14, 16, 114, 116, 14', 16', 14", 16") being connected together at their hinge ends, such that the jaw members (i) have a first self-sustaining open position in which the outer ends (22, 24) are spaced well apart and the inner retaining surfaces (30, 42) are generally not facing one another, (ii) have a second closed position in which the outer ends (22, 24) are engaged and the inner retaining surfaces (30, 42) are in confronting relationship, and (iii) are self-aligned such that the outer ends automatically engage together upon applying pressure on the outer press surfaces (32, 44, 32', 44', 32", 44"), the method comprising placing the jaw members into the first open position, passing the one or more items through a space (70) defined by the jaw members in the open position, and placing the jaw members (14, 16, 114, 116, 14', 16', 14", 16") into a closed position with the one or more items therein by applying pressure on the outer press surfaces (32, 44, 32', 44', 32", 44") of the jaw members until the inner retaining surfaces (30, 42) grasp against the one or more items, **characterised in that** the jaw members (14, 16, 114, 116, 14', 16', 14", 16") are capable of adopting a plurality of possible second dosed positions to provide a range of adjustment, the placing step comprising placing the jaw members into one of the possible second closed positions.

2. A method as claimed in Claim 1 further comprising bundling the one or more items such that the width of the bundle is greater than the width of any one item in the bundle, and passing the bundled item through the space (70) defined by the jaw members (14, 16, 114, 116, 14', 16', 14", 16") in the first position of the device.

3. A method as claimed in Claim 1 adapted for handling or storing a cloth article, further comprising gathering the cloth article together and passing the gathered cloth article through the space (70) defined by the jaw members (14, 16, 114, 116, 14', 16', 14", 16") in the first position of the device.

4. A device for handling or storing one or more items comprising a pair of generally rigid jaw members (14, 16, 114, 116, 14', 16', 14", 16") each jaw member having a hinge end (18, 20, 118, 120) and an outer end (20, 24) with an inner retaining surface (30, 42) and an outer press surface (32, 44, 32', 44', 32", 44") extending between the ends of the jaw member, the jaw members being connected together at their hinge ends, such that the jaw members (i) have a first, self-sustaining open position in which the outer ends (20, 24) are spaced well apart and the inner retaining surfaces (30, 42) are generally not facing one another, to define an item-receiving space (70) whereby the one or more items may pass into and between the jaw members without requiring external pressure to maintain the jaw members in the open position, (ii) have a second, closed position in which the outer ends (22, 24) are engaged and the inner retaining surfaces (30, 42) are in confronting relationship, and (iii) are self-aligned such that the outer ends automatically engage together upon applying pressure on the outer press surfaces, **characterised in that** the jaw members (14, 16, 114, 116, 14', 16', 14", 16") are capable of adopting a plurality of possible second closed positions in each of which the outer ends (22, 24) are engaged to provide a range of adjustment and the jaw members (14, 16, 114, 116, 14', 16', 14", 16") are in one of the second closed positions for handling or storing the one or more items.

5. A device as claimed in Claim 4 wherein one of the jaw members is integrally attached to an item that is handled or stored.

6. A device as claimed in either Claim 4 or Claim 5 further comprising an axle (26) connecting the jaw members (14, 16) together.

7. A device as claimed in either Claim 4 or Claim 5 further comprising a hinge strap (140, 140') connecting the jaw members (114, 116) together.

8. A device as claimed in any one of Claims 4 to 7 wherein at least one jaw member has an indicia surface (32, 44, 46), and further comprising a label (90, 92) applied to the indicia surface.

9. A device as claimed in any one of Claims 4 to 8 further comprising an engaging mechanism (38, 54) at the outer ends of the jaw members.

10. A device as claimed in Claim 9 wherein the engaging mechanism comprises barbed teeth (38) on a first one of the jaw members and a lock member (54) for engaging the teeth on a second one of the jaw members.

11. A device as claimed in Claim 10 wherein the lock member (54) has an engaging position and a disengaging position.

12. A device as claimed in Claim 11 wherein the lock member (54) is driven by spring force into its engaging position, and must be manually pushed from its engaging position to its disengaging position.

13. A device as claimed in any one of Claims 10 to 12 wherein the teeth (38) and lock member (54) are formed on the outer press surfaces (32', 44', 32", 44") of the jaw members.

14. A device as claimed in any one of Claims 4 to 13 further comprising an engaging mechanism (161) at the hinge end of the jaw members.

15. A device as claimed in Claim 14 wherein the engaging mechanism comprises mating teeth (161) in the jaw members at their hinge ends.

16. A device as claimed in Claim 14 wherein the engaging mechanism comprises abutting frictional surfaces on the jaw members at their hinge ends.

## Patentansprüche

1. Verfahren zur Verwendung einer Vorrichtung zum Hantieren oder Lagern eines oder mehrerer Gegenstände (12), wobei die Vorrichtung ein Paar im Wesentlichen starrer Backenelemente (14, 16, 114, 116, 14', 16', 14", 16") aufweist mit jeweils einem Gelenkende (18, 20, 118, 120) und einem äußeren Ende (22, 24), mit einer inneren Rückhalteoberfläche (30, 42), und einer äußeren Druckoberfläche (32, 44, 32', 44', 32", 44"), die sich zwischen den Enden der Backenelemente (14, 16, 114, 116, 14', 16', 14", 16") erstreckt, die an ihren Gelenkenden miteinander verbunden sind, so dass die Backenelemente
(i) eine erste selbsthaltende geöffnete Position aufweisen, in der die äußeren Enden (22, 24) gut voneinander beabstandet sind und die inneren Rückhalteoberflächen (30, 42) sich im Wesentlichen nicht gegenüber liegen,
(ii) eine zweite geschlossene Position aufweisen, in der die äußeren Enden (22, 24) sich im Eingriff befinden und die inneren Rückhalteoberflächen (30, 42) in gegenüberliegender Beziehung sind, und
(iii) selbstausgerichtet sind, so dass die äußeren Enden beim Ausüben eines Drucks auf die äußeren Druckoberflächen (32, 44, 32', 44', 32", 44") automatisch ineinander eingreifen, wobei das Verfahren umfasst Versetzen der Backenelemente in die erste geöffnete Position, Durchführen des einen oder der mehreren Gegenstände durch einen durch die Backenelemente in der geöffneten Position definierten Zwischenraum (70), und Versetzen der Backenelemente (14, 16, 114, 116, 14', 16', 14", 16") in eine geschlossene Position mit dem darin befindlichen einen oder mehreren Gegenständen durch Ausüben eines Drucks auf die äußeren Druckoberflächen (32, 44, 32', 44', 32", 44") der Backenelemente bis die inneren Rückhalteoberflächen (30, 42) gegen die einen oder mehreren Gegenstände greifen,
**dadurch gekennzeichnet, dass** die Backenelemente (14, 16, 114 ,116, 14', 16', 14", 16") eine Vielzahl möglicher zweiter geschlossener Positionen einnehmen können, um einen Einstellbereich bereitzustellen, wobei der Versetzungsschritt ein Versetzen der Backenelemente in eine der möglichen zweiten geschlossenen Positionen umfasst.

2. Verfahren nach Anspruch 1,
des weiteren umfassend Bündeln der einen oder mehreren Gegenstände, so dass die Ausdehnung des Bündels größer ist als die Ausdehnung eines jeden Gegenstands in dem Bündel, und Durchführen des gebündelten Gegenstandes durch den durch die Backenelemente (14, 16, 114, 116, 14', 16', 14", 16") in der ersten Position der Vorrichtung definierten Zwischenraums (70).

3. Verfahren nach Anspruch 1,
ausgestaltet zum Hantieren oder Lagern eines Kleidungsartikels, des weiteren umfassend Zusammenlegen des Kleidungsartikels und Durchführen des zusammengelegten Kleidungsartikels durch den durch die Backenelemente (14, 16, 114, 116, 14', 16', 14", 16") in der ersten Position der Vorrichtung definierten Zwischenraums (70).

4. Vorrichtung zum Hantieren oder Lagern eines oder mehrerer Gegenstände mit einem Paar von im Wesentlichen starren Backenelementen (14, 16, 114, 116, 14', 16', 14", 16"), wobei jedes Backenelement ein Gelenkende (18, 20, 118, 120) und ein äußeres Ende (20, 24) mit einer inneren Rückhalteoberfläche (30, 42) und einer äußeren Druckoberfläche (32, 44, 32', 44', 32", 44"), die sich zwischen den Enden des Backenelements erstrecken, aufweist, wobei die Backenelemente an ihren Gelenkenden miteinander verbunden sind, so dass die Backenelemente
(i) eine erste selbsthaltende geöffnete Position aufweisen, in der die äußeren Enden (20 24) gut voneinander beabstandet sind, und die inneren Rückhalteoberflächen (30, 42) sich im Wesentlichen nicht gegenüber liegen, um einen Gegenstandaufnahmezwischenraum (70) zu definieren, wodurch der eine oder die mehreren Gegenstände in und zwischen die Backenelemente durchgeführt werden können ohne einen externen Druck zur Beibehaltung der Backenelemente in der geöffneten Position zu erfordern,
(ii) eine zweite, geschlossene Position aufweist, in der die äußeren Enden (22, 24) im Eingriff sind und sich die inneren Rückhalteoberflächen (30, 42) in einer gegenüberliegenden Beziehung befinden, und
(iii) in solcher Weise selbstausgerichtet sind, dass die äußeren Enden beim Ausüben eines Drucks auf die äußeren Druckoberflächen automatisch ineinander eingreifen,
**dadurch gekennzeichnet, dass** die Backenelemente (14, 16, 114, 116, 14', 16', 14", 16") eine Vielzahl möglicher zweiter geschlossener Positionen einnehmen können, wobei sich die äußeren Enden (22, 24) in jeder dieser Positionen im Eingriff befinden, um einen Einstellbereich bereitzustellen, und die Backenelemente (14, 16, 114, 116, 14', 16', 14", 16") sich zur Hantierung oder Lagerung des einen oder der mehreren Gegenstände in einer der zweiten geschlossenen Positionen befinden.

5. Vorrichtung nach Anspruch 4,
wobei eines der Backenelemente integral an einem hantierten oder gelagerten Gegenstand angebracht ist.

6. Vorrichtung entweder nach Anspruch 4 oder Anspruch 5,
des weiteren umfassend eine die Backenelemente (14, 16) miteinander verbindende Achse (26).

7. Vorrichtung entweder nach Anspruch 4 oder Anspruch 5,
des weiteren umfassend ein die Backenelemente (114, 116) miteinander verbindendes Gelenkband (140, 140').

8. Vorrichtung nach einem der Ansprüche 4 bis 7,
wobei zumindest ein Backenelement eine Freistempeloberfläche (32, 44, 46) und des weiteren ein auf der Freistempeloberfläche angebrachtes Label (90, 92) aufweist.

9. Vorrichtung nach einem der Ansprüche 4 bis 8,
des weiteren umfassend einen Eingreifmechanismus (38, 54) an den äußeren Enden der Backenelemente.

10. Vorrichtung nach Anspruch 9,
wobei der Eingreifmechanismus mit Widerhaken versehene Zähne (38) auf einem ersten der Backenelemente und ein Verriegelungselement (54) zum Eingreifen der Zähne an einem zweiten der Backenelemente aufweist.

11. Vorrichtung nach Anspruch 10,
wobei das Verriegelungselement (54) eine eingreifende Position und ein lösende Position aufweist.

12. Vorrichtung nach Anspruch 11,
wobei das Verriegelungselement (54) durch eine Federkraft in seine eingreifende Position getrieben wird, und manuell von seiner eingreifenden Position in seine lösende Position gedrückt werden muss.

13. Vorrichtung nach einem der Ansprüche 10 bis 12,
wobei die Zähne (38) und das Verriegelungselement (54) auf den äußeren Druckoberflächen (32' 44', 321", 44") der Backenelemente gebildet sind.

14. Vorrichtung nach einem der Ansprüche 4 bis 13,
des weiteren umfassend einen Eingreifmechanismus (161) an dem Gelenkende der Backenelemente.

15. Vorrichtung nach Anspruch 14,
wobei der Eingreifmechanismus Gegenzähne (161) in den Backenelementen an deren Gelenkenden aufweist.

16. Vorrichtung nach Anspruch 14,
wobei der Eingreifmechanismus aneinander stoßende Reibungsoberflächen auf den Backenelementen an deren Gelenkenden aufweist.

## Revendications

1. Procédé pour utiliser un dispositif pour manipuler ou ranger un ou plusieurs articles (12), le dispositif ayant une paire de mâchoires (14, 16, 114, 116, 14', 16', 14", 16") généralement rigides, ayant chacune une extrémité articulée (18, 20, 118, 120) et une extrémité extérieure (22, 24), avec une surface de retenue intérieure (30, 42) et une surface de compression extérieure (32, 44, 32', 44', 32", 44") s'étendant entre les extrémités des mâchoires (14, 16, 114, 116, 14', 16', 14", 16") reliées au niveau de leurs extrémités articulées, de sorte que les mâchoires (i) ont une première position ouverte auto-entretenue dans laquelle les extrémités extérieures (22, 24) sont bien espacées et les surfaces de retenue intérieures (30, 42) ne sont généralement pas situées en vis-à-vis l'une de l'autre, (ii) ont une seconde position fermée dans laquelle les extrémités extérieures (22, 24) sont engagées et les surfaces de retenue intérieures (30, 42) sont situées en vis-à-vis, et (iii) sont auto-alignées de telle sorte que les extrémités extérieures viennent automatiquement en prise l'une avec l'autre lors de l'application d'une pression sur les surfaces de compression extérieures (32, 44, 32', 44', 32", 44"), le procédé consistant à placer des mâchoires dans la première position ouverte, à passer l'article ou les plusieurs articles à travers un espace (70) défini par les mâchoires dans la position ouverte, et à placer les mâchoires (14, 16, 114, 116, 14', 16', 14", 16") dans une position fermée avec l'article ou les plusieurs articles situés dedans en appliquant une pression sur les surfaces de compression extérieures (32, 44, 32', 44', 32", 44") des mâchoires jusqu'à ce que les surfaces de retenue intérieures (30, 42) viennent saisir l'article ou les plusieurs articles, **caractérisé en ce que** les mâchoires (14, 16, 114, 116, 14', 16', 14", 16") peuvent adopter une pluralité de secondes positions fermées possibles de manière à fournir toute une plage d'ajustement, l'étape de placement comportant le placement des mâchoires dans l'une des secondes positions fermées possibles.

2. Procédé selon la revendication 1, comportant en outre la mise en faisceau de l'article ou des plusieurs articles de sorte que la largeur du faisceau est supérieure à la largeur d'un article du faisceau, et le passage de l'article mis en faisceau à travers l'espace (70) défini par les mâchoires (14, 16, 114, 116, 14', 16', 14", 16") dans la première position du dispositif.

3. Procédé selon la revendication 1, adapté pour manipuler ou ranger un article en tissu, comportant en outre le pliage de l'article en tissu et le passage de l'article en tissu plié à travers l'espace (70) défini par les mâchoires (14, 16, 114, 116, 14', 16', 14", 16") dans la première position du dispositif.

4. Dispositif pour manipuler ou ranger un ou plusieurs articles comportant une paire de mâchoires (14, 16, 114, 116, 14', 16', 14", 16") généralement rigides, chaque mâchoire ayant une extrémité articulée (18, 20, 118, 120) et une extrémité extérieure (20, 24) avec une surface de retenue intérieure (30, 42) et une surface de compression extérieure (32, 44, 32', 44', 32", 44") s'étendant entre les extrémités de la mâchoire, les mâchoires étant reliées l'une à l'autre au niveau de leurs extrémités articulées, de sorte que les mâchoires (i) ont une première position ouverte auto-entretenue dans laquelle les extrémités extérieures (20, 24) sont bien espacées et les surfaces de retenue intérieures (30, 42) ne se sont généralement pas situées en vis-à-vis l'une de l'autre, pour définir un espace de réception d'article (70), l'article ou les plusieurs articles pouvant passer dans et entre les mâchoires sans nécessiter aucune pression externe pour maintenir les mâchoires dans la position ouverte, (ii) ont une seconde position fermée dans laquelle les extrémités extérieures (22, 24) sont en prise et les surfaces de retenue intérieures (30, 42) se situent en vis-à-vis, et (iii) sont auto-alignées de sorte que les extrémités extérieures viennent automatiquement en prise l'une avec l'autre lors de l'application d'une pression sur les surfaces de compression extérieures, **caractérisé en ce que** les mâchoires (14, 16, 114, 116, 14', 16', 14", 16") peuvent adopter une pluralité de secondes positions fermées possibles dans chacune desquelles les extrémités extérieures (22, 24) sont engagées de manière à fournir toute une plage d'ajustement et les mâchoires (14, 16, 114, 116, 14', 16', 14", 16") se situent dans l'une des secondes positions fermées pour manipuler ou ranger le ou les plusieurs articles.

5. Dispositif selon la revendication 4, dans lequel l'une des mâchoires est fixée entièrement à un article qui est manipulé ou rangé.

6. Dispositif selon la revendication 4 ou 5, comportant en outre un axe (26) reliant ensemble les mâchoires (14, 16).

7. Dispositif selon la revendication 4 ou 5, comportant en outre une bande d'articulation (140, 140') reliant ensemble les mâchoires (114, 116).

8. Dispositif selon l'une quelconque des revendications 4 à 7, dans lequel au moins une mâchoire a une surface indicielle (32, 44, 46), et comportant en outre une étiquette (90, 92) appliquée sur la surface indicielle.

9. Dispositif selon l'une quelconque des revendications 4 à 8, comportant en outre un mécanisme de mise en prise (38, 54) au niveau des extrémités extérieures des mâchoires.

10. Dispositif selon la revendication 9, dans lequel le mécanisme de mise en prise comprend des dents cannelées (38) sur une première des mâchoires et un élément de verrouillage (54) destiné à venir en prise avec les dents sur une seconde des mâchoires.

11. Dispositif selon la revendication 10, dans lequel l'élément de verrouillage (54) a une position de mise en prise et une position de non-mise en prise.

12. Dispositif selon la revendication 11, dans lequel l'élément de verrouillage (54) est entraîné par une force élastique dans sa position de mise en prise, et doit être poussé manuellement à partir de sa position de mise en prise vers sa position de non-mise en prise.

13. Dispositif selon l'une quelconque des revendications 10 à 12, dans lequel les dents (38) et l'élément de verrouillage (54) sont formés sur les surfaces de compression extérieures (32', 44', 32", 44") des mâchoires.

14. Dispositif selon l'une quelconque des revendications 4 à 13, comportant en outre un mécanisme de mise en prise (161) à l'extrémité articulée des mâchoires.

15. Dispositif selon la revendication 14, dans lequel le mécanisme de mise en prise comprend des dents (161) correspondantes dans les mâchoires à leurs extrémités articulées.

16. Dispositif selon la revendication 14, dans lequel le mécanisme de mise en prise comprend des surfaces frictionnelles en butée sur les mâchoires à leurs extrémités articulées.
